# NEUE EUROPÄISCHE PATENTSCHRIFT

(11) **EP 0 300 151 B2**
(45) Veröffentlichungstag und Bekanntmachung des Hinweises auf die Entscheidung über den Einspruch: **04.05.1994**
(45) Hinweis auf die Patenterteilung: 08.08.1990
(21) Anmeldenummer: 88107419.9
(22) Anmeldetag: 09.05.1988
(51) Int. Cl.: C01B 3/02, C01B 3/38

(54) **Verfahren zur Herstellung von Ammoniak aus Erdgas**
Process for preparing ammoniac from natural gas
Procédé de préparation d'ammoniac à partir de gaz naturel

(30) Priorität: 13.06.1987 DE 3719780
(43) Veröffentlichungstag der Anmeldung: 25.01.1989
(73) Patentinhaber: Uhde GmbH, 44141 Dortmund (DE)
(72) Erfinder: Herbort, Hans-Joachim, Dipl.-Ing., D-5758 Fröndenberg (DE); Peters, Claus, Dipl.-Ing., D-4630 Bochum (DE)
(74) Vertreter: Patentanwälte Meinke, Dabringhaus und Partner

(56) Entgegenhaltungen:
- EP-A- 0 093 502
- EP-A- 0 110 093
- EP-A- 0 214 432
- WO-A-86/00286
- DE-A- 2 412 841
- GB-A- 115 952
- GB-A- 2 153 382
- GB-B- 2 067 175
- GB-B- 2 087 855
- JP-A-53 082 691
- US-A- 3 278 452
- US-A- 4 479 925

## Beschreibung

Die Erfindung betrifft ein Verfahren zur Herstellung von Ammoniak aus Erdgas, LPG, Naphtha oder bereits Wasserstoff enthaltenen Gasen, wobei im Verfahren eine kombinierte, autotherme Reformierung erfolgt und dem System Sauerstoff und vorgewärmte Luft als getrennte Gasströme zugeführt werden.

Übliche Verfahren zur Herstellung von Ammoniak mittels Dampfreformierung gliedern sich in zwei Hauptgruppen, solche, die wenigstens einen Teil der endothermen Dampfreformierung in einem gefeuerten Rauchgas erzeugenden Reaktor durchführen, wobei das Rauchgas auch unter erhöhtem Druck stehen kann, und solche, die ein gänzlich autotherme, von der partiellen Oxidation des behandelten Gasstromes getragene primäre und sekundäre Dampfreformierung durchführen.

Zur ersten Gruppe werden auch solche Verfahren gezählt, die anstelle des Rauchgasstromes einen heißen Fremdgasstrom, z.B. Helium, als Wärmeträger benötigen.

Verfahren, die eine partielle Oxidation mit nur eine katalytischen Dampfreformierungsstufe beinhalten, wobei diese Stufe der partiellen Oxidation vor-, nach- oder parallel geschaltet sein kann, werden hier nicht betrachtet, da ihre Prozeßführung von der hier betrachteten grundlegend abweicht. Typische Beispiele solcher Verfahren sind in der DE-OS 33 45 088 und DE-OS 33 43 114 offenbart worden.

Verfahren der ersten Gruppe, die wenigstens einen Teil der katalytischen Dampfreformierung in einem gefeuerten, Rauchgas erzeugenden Reaktor durchführen, sind z. B. in der EP 0 093 502 veröffentlicht worden. Für Verfahren dieser Gruppe, die statt Rauchgas ein hießes Fremdgas benutzen, wird als typisches Beispiel die DE-OS 24 12 841 angesehen.

Die hier vorliegende Erfindung gehört zu den Verfahren der zweiten Gruppe, die eine gänzlich autotherme, von der partiellen Oxidation des behandelten Gasstromes getragene primäre und sekundäre Dampfreformierung durchführen.

Stand der Technik für solche Verfahren ist z.B. die GB-A 2 153 382 bzw. das US-Patent 4 666 680, die DE-OS 35 32 413 oder ein Aufsatz in "Ammonia Plant Safety" Vol. 24, S. 64 ff. von Takeshi Miyasugi u.a.

Zur Durchführung des Verfahrens benutzt der in GB 2 153 382 bzw. im US-Patent 4 666 680 beschriebene Prozeß Sauerstoff oder mit Sauerstoff angereicherte Luft von mindestens 25 % O₂, vorzugsweise 35 % O₂ für die Erzeugung von Ammoniak-Synthesegas. Die Wirtschaftlichkeit dieses Prozesses wird maßgeblich durch die Menge an Sauerstoff bestimmt, die der Luft bei Einhaltung des gewünschten H2: N₂ Verhältnisses sowie Restmethangehaltes im Synthesegas zugemischt werden muß. Die Bereitstellung dieser Sauerstoffmenge sowie die Oxidation eines entsprechenden Teiles des aus der primären Reformierungsstufe austretenden Gases zehren an der Wirtschaftlichkeit des Verfahrens. Ausgehend von der gewünschten Gaszusammensetzung am Ausgang aus den in der genannten Patentliteratur beschriebenen Vorrichtungen und ansonsten konstanten Prozeßparametern ist die erforderliche Sauerstoffmenge abhängig von
a) der Temperaturdifferenz zwischen dem in die Vorrichtung eintretenden Einsatzstromgemisch aus KWST-haltigem Gas und Dampf und dem aus der Vorrichtung austretenden reformierten Strom und
b) der Temperatur des dem Bereich der partiellen Oxidation zugeführten Oxidationsmittels.

Die Temperaturdifferenz a) kann ohne Schwierigkeiten unter wirtschaftlichen Gesichtspunkten optimiert werden, der Temperatur b) hingegen sind wegen des hohen Oxidationspotentials (0₂ 25 ./. 40 Vol %) des Oxidationsmittels Grenzen gesetzt. Eine Aufheizung erfordert zudem den Einsatz teurer sauerstoffgerechter Materialien. In GB 2 153 382 wird vorgeschlagen, diese Schwierigkeiten durch Zugabe von Dampf zur angereicherten Luft zu mildern. Es ist jedoch offensichtlich, daß zusätzlicher Dampf ebenso wir zusätzlicher Stickstoff Wärme aus dem Reaktor austrägt und damit die für die Prozeßdurchführung erforderliche Hochtemperaturwärme mindert.

Der Erfindung liegt daher die Aufgabe zugrunde, eine wirtschaftliche und verfahrenstechnisch einfache Methode zu finden, die die Erzeugung von Ammoniak mit Hilfe einer kombinierten autothermen Dampfreformierung bei deutlich reduzierter Sauerstoffmenge und damit auch Einsatzgasmenge erlaubt.

Diese Aufgabe wird bei einem Verfahren der eingangs genannten Artdurch die folgenden, zum Teil für sich gesehen an sich bekannten Verfahrensschritte gelöst, die darin bestehen, daß der neben dem Luftsauerstoff getrennt zuzuführende zusätzliche Sauerstoff von einem konzentrierten Sauerstoffstrom von mindestens 50 % 0₂-Gehalt bereitgestellt wird, wobei dieser konzentrierte Sauerstoffstrom auf nicht mehr als 250°C vorgewärmt wird, daß der Luftstrom auf eine Temperatur zwischen 450 und 900°C vorgewärmt wird und daß mit dem Luftstrom und/oder dem zusätzlichen Sauerstoffstrom das gewünschte H₂/N₂-Verhältnis am Ausgang der Reformierungsstufe eingestellt wird.

Weitere vorteilhafte Ausgestaltungen derverfahrensweise sind in den Unteransprüchen angegeben, so wird der Sauerstoffstrom, der je nach Herknuft mehr als 50 Vol % 0₂ enthalten soll, auf höchstens 250°C erwärmt. Seine Temperatur ist bevorzugt die Kompressoraustrittstemperatur, kann aber auch gegen kondensierenden Dampf vorgewärmt werden.

Die Luft wird hoch erhitzt auf 450 - 900°C, bevorzugt auf eine Temperatur, die höher liegt als die Temperatur des reformierten Gases am Austritt aus der autothermen Stufe. Die Aufheizung der Luft kann auf verschiedene Art erfolgen, bevorzugt durch Verbrennen des Syntheseab- und Restgase in einem Überhitzer.

Die so mögliche hohe Vorwärmung des gemessen am Sauerstoffstrom großen Luftstromes führt zu einer deutlichen Reduzierung des benötigten Gesamtsauerstoffes des Prozesses und damit zu Einsparungen bei der Bereitstellung des konzentrierten Sauerstoffstromes und konsequenter Weise zu einer Reduzierung des benötigten KWST-Einsatzes in dem Prozeß.

Ein weiterer Vorteil des erfindungsgemäßen Verfahrens ist die Vereinfachung und stärkere Entkopplung der Steuerung der wichtigen Prozeßparameter H₂/N₂ und Restmethangehalt. Die Menge an konzentriertem 0₂ bzw. die Höhe der Vorwärmung des Luftstromes können jeweils für sich den Restmethangehalt steuern, während der Luftmenge im wesentlichen das H₂/N₂ Verhältnis steuert.

Es hat sich gezeigt, daß die katalytische Dampfreformierung bei einem H₂0 : C Verhältnis durchgeführt werden kann, das im Produktgasstrom, der anschließend einer katalytischen CO-Konvertierung unterzogen wird, zu einem Defizit am Dampf für diese Konvertierung führt. (Hierwird unterstellt, daß die genannten Prozeßschritte und Verhältnisse den in der Ammoniaktechnologie Bewanderten bekannt sind). Die Folgen sind unerwünschte Nebenreaktionen, die unter anderem zur Bildung von KWST und deren erneuter Umbildung am Katalysator führen und einen die Produktion behindernden Anstieg des Druckverlustes in der Konvertierung hervorrufen.

Ein weiterer Vorteil des erfindungsgemäßen Verfahrens besteht daher auch darin, daß in der autothermen Reformie rungsstufe ein den Sauerstoffbedarf günstig beeinflussendes geringes H₂0/C Verhältnis eingestellt wird und eine die Erfordernisse der Konvertierung deckende zusätzliche Dampfmenge vorderen Durchführung zugesetzt wird.

Ein anderes Merkmal dieses Verfahrens sind die fehlenden Hochtemperatur - Abgasströme, wie sie beim klassischen primären und sekundären Dampfreformieren auf der Rauchgasseite bzw. prozeßgasseite anfallen. Das führt dazu, daß wohl noch ausreichend Dampf erzeugt werden kann mit der Abwärme nach der Reformierungsstufe, in der Konvertierung und in der Synthese, daß jedoch eine Überhitzung des Dampfes mit Prozeßabwärme zum wirtschaftlichen Einsatz in Turbinen nicht möglich ist.

Natürlich aber kann durch Einsatz fossiler Brennstoffe und/oder Prozeßfremder Heißgasströme eine effiziente Dampfwirtschaft zur Deckung der Kompressionsenergien des Prozesses durchgeführt werden. Auch bietet sich bei Verfügbarkeit entsprechender Brennstoffe eine gemischte Dampf- und Gasturbinenwirtschaft an. Im Besonderen aber wird dieses Verfahren dann allen anderen überlegen, wenn z.B. preiswerte elektrische Energie zur Verfügung steht.

Das erfindungsgemäße Verfahren macht preiswerte Sattdampferzeugung möglich. Der Dampf kann wie folgt genutzt werden:
a) Einsatz einer Absorbtions-Kälteanlage und Nutzung der Kälte für
   - eine Reduktion der erforderlichen Kompressionsenergien durch Kühlen zu verdichtender Gase
   - den Einsatz einer physikalischen C0₂ Wäsche
   - das Trocknen von Gasen
   - Gasfraktionierung durch Tieftemperaturzerlegung.
b) Absorbieren von Ammoniak aus dem reagierten Kreislaufgas mit Wasser, teilweise oder vollständig, und ein- oder mehrstufiges Desorbieren mit Hilfe von Dampf, wobei das den Adsorberverlassende und weniger als 1 Vol % Ammoniak enthaltende Kreislaufgas zunächst vorgekühlt und dann einem Trockner auf Zeolithbasis zugeführt wird, bevor es aufgewärmt und im wesentlichen frei von Wasser und Ammoniak dem Konverter erneut zugeführt wird. Dabei ist der Kreislaufgasverdichter zwischen Adsorber und Trockner geschaltet. Die Regeneration der Trockner erfolgt mit einem Teil des getrocknetem Kreislaufgases. Alle ammoniakhaltigen Ströme werden in das Absorbtions/Desorbtionssystem zurückgeführt.

In einer besonderen Ausgestaltung des Verfahrens ist es auch möglich, einen Teil der Prozeßabwärme zur Verdampfung und gegebenenfalls Überheizung mindestens eines Teiles des den Absorber verlassenden Ammoniakwassers zu nutzen und diesen Strom sodann einer Turbine zuzuführen, deren Abdampf dem Desorber der unter b) beschriebenen Ammoniakentfernung aus dem Kreislaufgas zugespeist werden kann. Diese Turbine treibt zweckmäßig einen Generator und gegebenenfalls den Kreislaufverdichter und/oder einen NH₃-Kompressor.

Natürlich ist es auch möglich, einen Prozeßstrom unmittelbar zur Durchführung der Desorbtion heranzuziehen. In anderer Abwandlung des Verfahrens kann die komprimierte Prozeßluft auch zur Verbrennung eines nicht aus der primären Dampfreformierungsstufe austretenden Gases benutzt werden. Geschieht das außerhalb der partiellen Oxidationszone, so ist es günstig, die Prozeßluft vor Verbrennung des Zusatzgases mit wenigstens der Sauerstoffmenge anzureichern, die zur Verbrennung dieser Zusatzgasmenge erforderlich ist, und die Zusatzgasmenge so zu wählen, daß die gewünschte Luftvorwärmung erreichtwird. Auf diese Weise kann dem Verbrennungsprodukt ein Sauerstoffgehalt ähnlich dem unserer Umgebungsluft aufgegeben werden. Wird als Gas z.B. Purge-Gas aus der Synthese gewählt so findet eine Anreicherung des erzeugten Synthesegases mit Argon statt, was in manchen Fällen zu der Gewinnung erwünscht sein kann.

Der Gesamtsauerstoffbedarf in der autothermen Dampfreformierungsstufe kann zusätzlich auch dadurch vermindertwerden, daß der Stickstoffeintrag in diese Stufe durch Verminderung der Luftmenge unter das Maß für das gewünschte H₂/N₂ Verhältnis im fertigen Synthesegas gedrückt wird. Die Einstellung des gewünschten Verhältnisses von H₂ : N₂ kann dann z.B. erfolgen durch Einführen einer selektiven katalytischen CO-Oxidierung (SELECTOXO Verfahren) von der CO₂- Entfernung aus dem Synthesegas, wobei vorteilhaft ein mit Sauerstoff verunreinigter Stickstoffstrom benutzt werden kann. Die H₂/N₂ Einstellung kann natürlich auch im Rahmen einer Tieftemperaturreinigung des Synthesegases erfolgen.

## Patentansprüche

1. Verfahren zur Herstellung von Ammoniak aus Erdgas, LPG Naphtha oder bereits Wasserstoff enthaltenen Gasen, wobei im Verfahren eine kombinierte, autotherme Reformierung erfolgt und dem System Sauerstoff und vorgewärmte Luft als getrennte Gasströme zugeführt werden, gekennzeichnet durch die folgender, zum Teil für sich gesehenen an sich bekannten Verfahrensschritte, die darin bestehen, daß der neben dem Luftsauerstoff getrennt zuzuführende zusätzliche Sauerstoff von einem konzentrierten Sauerstoffstrom von mindestens 50 % 0₂-Gehalt bereitgestellt wird, wobei diese konzentrierte Sauerstoffstrom auf nicht mehr als 250°C vorgewärmt wird, daß der Luftstrom auf eine Temperatur zwischen 450 und 900°C vorgewärmt wird und daß mit dem Luftstrom und/oder dem zusätzlichen Sauerstoffstrom das gewünschte H₂/N₂-Verhältnis am Ausgang der Reformierungsstufe eingestellt wird.

2. Verfahren nach Anspruch 1, dadurch gekennzeichnet, daß zwischen der Eintrittstemperatur des eingesetzten Kohlenwasserstoff/Dampfgemisches und der Temperatur des austretenden reformierten Stromes eine Temperaturdifferenz von weniger als 150°C eingestellt wird.

3. Verfahren nach Anspruch 1 oder 2, dadurch gekennzeichnet, daß die Zuspeisung des kälteren Sauerstoffstromes im Verhältnis des Ballaststoffanteiles am Ende des Prozesses geregelt wird.

4. Verfahren nach einem der vorangehenden Ansprüche, dadurch gekennzeichnet, daß vor oder nach der kombinierten, autothermen Reformierung an sich bekannte Verfahrensschritte, wie die Entschwefelung des Einsatzprodukts, die Umwandlung von CO zu C0₂, die Entfernung von C0₂, die Abtrennung von Ammoniak und/oder Wasserstoff aus dem Synthesegas und Rückführung in den jeweiligen Hauptstrom, durchgeführt werden.

5. Verfahren nach einem der vorangehenden Ansprüch, dadurch gekennzeichnet, daßdereingesetzte Luftstrom auf Temperaturen um 700°C und der zugeführte Sauerstoffstrom auf Umgebungstemperatur gehalten wird.

6. Verfahren nach einem der vorangehenden Ansprüche, dadurch gekennzeichnet, daß der Methangehalt am Austritt aus der Reformerstufe auf 0,2 - 3 Vol-%, insbesondere auf 1,3 Vol-%, geregelt wird.

7. Verfahren nach einem der vorangehenden Ansprüche, dadurch gekennzeichnet, daß das H₂/N₂-Verhältnis im Synthesegas auf 2,1 bis 2,9 geregelt wird.

8. Verfahren nach einem der vorangehenden Ansprüche, dadurch gekennzeichnet, daß der Zone der partiellen Oxidation in der Reformerstufe gasförmiger Brennstoff von außerhalb der Dampfreformierungszone zugeführt wird.

9. Verfahren nach einem der vorangehenden Ansprüche, dadurch gekennzeichnet, daß das H₂0/C-Verhältnis der Gesamtheit der dem Reformer zugeführten Stoffströme kleiner als 2,75 gehalten wird, wobei dem Gasstrom nach Verlassen der Reformerstufe weiterer Dampf zugeführt wird.

10. Verfahren nach einem der vorangehenden Ansprüche, dadurch gekennzeichnet, daß die dem Reformer zugeführte N₂-Menge kleiner gehalten wird als die zur NH₃-Bildung stöchiometrich im Synthesegas erforderliche Menge, wobei im Zuge einer vor der C0₂-Enffernung erfolgenden selektiven C0₂-Oxidierung ein mit Sauerstoff verunreinigter Stickstoffatom zur Einstellung des gewünschten H₂/N₂-Verhältnisses zugeführt wird.

11. Verfahren nach einem der vorangehenden Ansprüche, dadurch gekennzeichnet, daß die dem Reformer zugeführte N₂-Menge kleiner gehalten wird als die zur NH₃-Bildung stöchiometrich im Synthesegas erforderliche Menge, wobei das gewünschte H₂/N₂-Verhältnis im Zuge einer Tieftemperaturreinigungsstufe des Synthesegases hergestellt wird.

12. Verfahren nach einem der vorangehenden Ansprüche, dadurch gekennzeichnet, daß NH₃ aus dem Synthesekreislaufgas wenigstens teilweise durch Absorption in Wasser abgetrennt und das Kreislaufgas anschließend einer Trocknung zugeführt wird.

13. Verfahren nach Anspruch 12, dadurch gekennzeichnet, daß für eine Desorption des gebundenen NH₃ aus Prozeßabwarme gewonnener Sattdampf und/oder ein heißer Prozeßgasstrom herangezogen wird.

## Revendications

1. Procédé de préparation d'ammoniac à partir de gaz naturel, de gaz de pétrole liquéfié, de naphta ou de gaz contenant déjà de l'hydrogène, un reformage autothermique combiné ayant lieu dans le procédé et de l'oxygène et de l'air préchauffé étant introduits dans le système sous forme de courants gazeux séparés, caractérisé par les étapes de procédé suivantes, qui sont en partie connues en soi, et qui consistent en ce que l'oxygène supplémentaire qui doit être ajouté séparément en plus de l'oxygène de l'air est fourni par un courantd'oxygène concentré ayant une teneur en oxygène d'au moins 50%, ce courant d'oxygène concentré étant préchauffé à une température d'au plus 250°C, en ce que le courant d'air est préchauffé à une température comprise entre 450 et 900°C et en ce que le rapport H₂/N₂ souhaité est établi à la sortie de l'étape de reformage avec le courant d'air et/ou le courant d'oxygène supplémentaire.

2. Procédé selon la revendication 1, caractérisé en ce qu'entre la température d'entrée du mélange hydrocarbure/vapeur utilisé et la température du courant reformé sortant on établit une différence de température inférieure à 150°C.

3. Procédé selon la revendication 1 ou 2, caractérisé en ce que l'introduction du courant d'oxygène plus froid est réglée en proportion de la fraction de produits inertes à la fin du processus.

4. Procédé selon l'une des revendications précédentes, caractérisé en ce qu'avant ou après le reformage autothermique combiné, on réalise des étapes de procédé connues en soi, comme la désulfuration du produit utilisé, la conversion de CO en C0₂, l'élimination de C0₂, la separation de l'ammoniac et/ou de l'hydrogène du gaz de synthèse et le recyclage dans le courant principal correspondant.

5. Procédé selon l'une des revendications précédentes, caractérisé en ce que le courant d'air utilisé est maintenu à des températures voisines de 700°C et le courant d'oxygène introduit est maintenu à la temperature ambiante.

6. Procédé selon l'une des revendications précédentes, caractérisé en ce que la teneur en méthane à la sortie de l'étape de reformage est réglée à 0,2-3% en volume, en particulier à 1,3% en volume.

7. Procédé selon l'une des revendications précédentes, caractérisé en ce que la rapport H₂/N₂ dans le gaz de synthèse est réglé entre 2,1 et 2,9.

8. Procédé selon l'une des revendications précédentes, caractérisé en ce que l'on introduit de l'extérieur de la zone de reformage à la vapeur un combustible gazeux dans la zone d'oxydation partielle de l'étape de reformage.

9. Procédé selon l'une des revendications précédentes, caractérisé en ce que le rapport H₂0/C de la totalité des courants de produits introduits dans le reformeur est maintenu à une valeur inférieure à 2,75 un supplément de vapeur étant ajouté au courant gazeux après la sortie de l'étape de reformage.

10. Procédé selon l'une des revendications précédentes, caractérisé en ce que la quantité de N₂ introduite dans le reformeur est maintenue inférieure à la quantité nécessaire du point de vue stoe- chiométrique pour la formation de NH₃ dans le gaz de synthèse, un courant d'azote contenant de l'oxygène comme impureté étant introduit au cours d'une oxydation de CO sélective qui a lieu avant l'élimination de C0₂ pour établir le rapport H₂/N₂ souhaité.

11. Procédé selon l'une des revendications précédentes, caractérisé en ce que la quantité de N₂ introduite dans le reformeur est maintenue inférieure à la quantité nécessaire du point de vue stoe- chiométrique pour la formation de NH₃ dans le gaz de synthèse, le rapport H₂/N₂ souhaité étant établi au cours d'une étape d'épuration à basse température du gaz de synthèse.

12. Procédé selon l'une des revendications précédentes, caractérisé en ce que le NH₃ provenant du gaz de recyclage de synthèse est séparé au moins en partie par absorption dans l'eau, et le gaz de recyclage est conduit ensuite à un séchage.

13. Procédé selon la revendication 12, caractérisé en ce que l'on utilise, pour une désorption du NH₃ lié, de la vapeur saturée produite grâce à la chaleur perdue du procédé et/ou un courant de procédé chaud.

## Claims

1. Amethod of manufacturing ammonia from natural gas, LPG, naphtha or gases already containing hydrogen, according to which a combined, autothermic reformation takes place and oxygen and preheated air are supplied to the system as separate gas streams, characterised by stages which, considered individually, are partly known per se, and which involve: making available additional oxygen from a concentrated oxygen stream of at least 50% oxygen content, which is to be supplied separately in addition to the oxygen in the air, this concentrated oxygen stream being pre-heated to not more than 250°C; the pre-heating of the air stream to a temperature between 450 and 900°C; and the adjustment of the desired H₂/N₂ ratio with the air stream and/or the additional oxygen stream at the start of the reformation stage.

2. A method according to claim1, characterised in that a temperature differential of lesss than 150° is set between the inlet temperature of the hydro- carbon/steam mixture and the temperature of the discharging reformed stream.

3. Amethod according to claim 1 or 2, characterised in that the supply of the colder oxygen stream is regulated in proportion to the quantity of ballast material at the end of the process.

4. A method according to one of the preceding claims, characterised in that before or after the combined, autothermic reformation, stages are carried out which are known per se, such as de- sulphurisation of the product being used, conversion of CO to CO₂, removal of CO₂, separation of ammonia and/or hydrogen from the synthesis gas and re-cycling into the respective main stream.

5. A method according to one of the preceding claims, characterised in that the air stream used is kept at temperatures of about 700°C and the oxygen straem supplied is kept at the ambient temperature.

6. A method according to one of the preceding claims, characterised in that the methane content at the outlet from the reformer stage is regulated to 0.2-3% by volume, in particular to 1.3% by volume.

7. A method according to pic, characterised in that the H₂/N₂ ratio in the synthesis gas is regulated to 2.1 to 2.9.

8. A method according to one of the preceding claims, characterised in that gaseous fuel is supplied from outside the steam reforming zone to the zone of partial oxidisation in the reformer stage.

9. A method according to one of the preceding claims, characterised in that the H₂0/C ratio of the whole of the streams of substances supplied to the reformer is kept smaller than 2.75, additional steam being supplied to the gas stream after it has left the reformer stage.

10. A method according to one of the preceding claims, characterised in that the quantity of N₂ supplied to the reformer is kept smaller than the quantity stochiometrically required in the synthesis gas for the formation of NH₃, a nitrogen stream with oxygen impurity being supplied to make up the desired H₂/N₂ ratio after selective C0₂ oxidisation carried out before the removal of CO₂.

11. A method according to one of the preceding claims, characterised in that the quantity of N₂ supplied to the reformer is kept smaller than the quantity stochiometrically required in the synthesis gas for the formation of NH₃, the desired H₂/N₂ ratio being produced after a low-temperature cleaning stage of the synthesis gas.

12. A method according to one of the preceding claims, characterised in that NH₃ is separated from the circulating synthesis gas at least partly by absorption in water, and the circulating gas is then supplied to a drying plant.

13. A method according to claim 12, characterised in that saturated steam obtained from the lost heat of the process and/or a hot process gas stream is used for desorption of the combined NH₃.
